# EUROPEAN PATENT SPECIFICATION

(11) **EP 2 199 258 B1**
(45) Date of publication and mention of the grant of the patent: **31.05.2017**
(21) Application number: 09180091.2
(22) Date of filing: 21.12.2009
(51) Int. Cl.: C01B 35/02, C01B 35/04, C04B 35/58

(54) **A PROCESS FOR PRODUCING OPTIONALLY DOPED ELEMENTAL BORON**
VERFAHREN ZUR HERSTELLUNG VON WAHLWEISE DOTIERTEM ELEMENTAREN BOR
PROCÉDÉ DE PRODUCTION DE BORE ÉLEMENTAIRE ÉVENTUELLEMENT DOPÉ

(30) Priority: 22.12.2008 IT TO20080962
(43) Date of publication of application: 23.06.2010
(73) Proprietor: CONSIGLIO NAZIONALE DELLE RICERCHE, 00185 Roma (IT); Siri, Antonio Sergio, 16167 Genova (IT)
(72) Inventor: Siri, Antonio Sergio, I-16167 Genova (IT); Vignolo, Maurizio, I-16132 Genova (IT)
(74) Representative: Rambelli, Paolo

(56) References cited:
- WO-A1-03/106373
- WO-A2-03/049849
- US-A- 3 551 533
- US-A1- 2004 031 387
- MCGRATH P J ET AL: "Theoretical process development for freeze-drying spray-frozen aerosols" JOURNAL OF THE AMERICAN CERAMIC SOCIETY USA, vol. 75, no. 5, May 1992 (1992-05), pages 1223-1228, XP002555821 ISSN: 0002-7820
- MATSUDA M ET AL: "Synthesis of Ba2RCu4O8 (R=Y, Sm) superconductors at oxygen pressure of 1 atm by spray-frozen/freeze-drying method" JOURNAL OF THE AMERICAN CERAMIC SOCIETY USA, vol. 76, no. 6, June 1993 (1993-06), pages 1618-1620, XP002555899 ISSN: 0002-7820

## Description

The present invention regards a method for the production of elementary amorphous boron, particularly suitable for the production of doped boron.

Industrially, boron is predominantly obtained by magnesio-thermic reaction, treating a reducing metal with an oxidized boron compound, alternatively by thermal decomposition of diboranes or boron halides with hydrogen. The first reaction causes an amorphous boron having a purity level less than 98% and the second method provides a crystalline boron with a high degree of purity.

It is commercially available both amorphous and crystalline boron, with variable purity and grain sizes, generally not less than micrometric scale. The boron commercially available is an element having several industrial applications, among which can be mentioned uses at elementary state in semiconductors, in glasses, as fluxing agent in steel and special alloys production. Boron compounds are used as abrasives, neutron absorbers, refractory materials, airbag triggers, propellant for rockets, bleaches, catalysers, disinfectants. Particularly important is the use of boron as superconductor in the magnesium diboride (MgB₂) compound.

Considering the important applications of magnesium diboride as superconductor, the identification of production methods for the optimisation of its superconducting properties is particularly interesting.

The synthesis of MgB₂ phase was carried out at various conditions, all characterized by the reaction between magnesium in solid, liquid or vapour phase, and boron powders. Anyhow, the formation reaction of the MgB₂ phase is caused by the magnesium intercalation in the B planes, due to the big difference of the melting point between the two elementary precursors. Moreover, it is known that the superconducting properties are strongly correlated to the (crystal) lattice order of the phase, at short and at medium range distance. Particularly, an optimal disorder at short range causes higher value of the critical field/current (Hc), while an optimal disorder at medium range influences positively the superconductor critical current, enhancing the pinning force. In traditional superconductors, these two different disorders are obtained through metallurgic processes and through cold working, for instance by formation of substitutional or interstitial alloys. This is relatively easy to realise, since metal precursors and metallic end-products are involved; nevertheless it is evident/clear the problem of repeating these methodologies in the case of MgB₂, for the above mentioned reasons.

A first object of the invention is to provide a method for realising optimal defects at short and medium range into the crystal lattice, maintaining them unchanged (or freezing) after the phase formation. A further object of the invention is to provide a method for the production of elementary boron with improved properties, particularly in order to use it for the production of magnesium diboride having improved superconducting properties, in the region of high magnetic fields (5-10T). It is evident that the boron obtained through the invention can be used in all applications where boron is involved in a solid state reaction (or partially), such in case of the MgB₂, hence when precursors having a high difference in melting point are involved.

The method according to the invention leads to the production of particles of amorphous boron, preferably of nanometric size. US 2006/0165577 describes a method for the production of boron oxide, or its derivatives, with a high surface area, through a solubilization process of boron oxide or boric acid in water and (subsequent) lyophilisation or supercritical drying. However said method is aimed to the production of boron oxide to be used as means for hydrogen storage, employed as fuel.

Another object of the invention is to provide a method suitable for the industrial production of doped boron.

Doped boron is, in fact, not commercially available and it is necessary a preparation in laboratory. Doped boron is not an attractive target for industries producing it, considering the wide range of possible dopants and the complexity of the doping techniques.

The doping technique of boron through the "mechanical alloying" is unlikely, because its grinding is difficult to realize, since the element is practically second only to the diamond in the Mohs's scale (hardness 9.3). The chemical nature of boron and of dopant elements (carbon C, silicon carbide SiC and more in general elements and compounds with high melting point) does not allow the direct dispersion; in fact, must be considered their poor metallic behaviour and their high melting point (over 2076 °C).

The indirect chemical technique, that considers the dispersion of an element or a compound during the magnesio-thermic synthesis (reaction), simply starting from the mechanical (pre-)mixing of the dopant with the boron precursors, seems unfeasible, since the chemical homogeneity is not sufficiently ensured and the formation of undesired secondary products is difficult to exclude.

As is clear from the literature, the boron synthesis, as well as its direct and indirect doping process, according to its elementary state or to its compound form, can be done by gaseous process (starting from its gaseous compounds). This is accomplished by using appropriate mixtures of gases, including a gaseous reducing agent (e.g. H₂), containing the doping element (e.g. methane CH₄, also a reducing agent) and oxidised boron (e.g. boron trichlorine BCl₃); this way/technique appears cheaper than the magnesio-thermic reaction, since it is necessary to extract the boron from its mineral precursors, then to oxidised it for obtaining the gaseous compound which should subsequently be reduced again. Also, safety and environmental health conditions should be taken into account, since the operations includes managing hazardous gases (toxic and explosive) and potentially pollutants such as diborane (B₂H₆) and halide like BCl₃, BF₃ etc.. For these reasons, it is often preferred to insert the doping element into the final boron compound, rather than inserting it within the precursor; this way/technique, although immediate, however does not ensure optimal results from the (chemical) homogeneity point of view.

WO03/106373A1 relates to the preparation of a superconducting material based on magnesium diboride, wherein the factors of critical current density, irreversibility field and flux spinning properties of MgB₂ are improved by a chemical doping; the starting materials, particularly boron and magnesium are in powder form, preferably consisting of nanoparticles.

Another object of the invention is therefore to provide a method for the insertion of foreign (dopant) elements on the boron crystal sites and/or the controlled dispersion of molecules, or of particles with various grain size, in the boron matrix, being assured in any case the chemical homogeneity of the final product, performing a proper handling of reagents and of obtained products.

In view of the above mentioned purposes, it is object of the invention a method having the characteristics defined in the claims which follow.

Further characteristics and advantages of the method according to the invention will become clear from the detailed description which follows.

In the appended drawings:
- Fig. 1 is a diffractogram (radiation source: Cu K Kα1, λ = 1.5418 Å) showing an X-ray analysis of the boron obtained by the method according to the invention (dotted curve) compared with boron commercially available (solid curve);
- Fig. 2a is a SEM (scanning electron microscopy) picture, magnification 30.000X, of boron powder obtained by the method according to the invention;
- Fig. 2b is a chart showing the grain size distribution of boron in Fig. 2a;
- Fig. 3a is a SEM image, at magnification of 30.000X, of commercial boron;
- Fig. 3b shows the grain size distribution of commercial boron in fig. 3a;
- Fig. 4a is a HRTEM (high resolution transmission electron microscopy) image of boron according to the invention;
- Fig. 4b is a HRTEM picture of commercial boron;
- Fig. 5a is a SEM image, at 1000X magnification, showing the dispersion of titanium dioxide TiO₂ (light particles) in the B₂O₃ matrix as a result of the method according to the invention; and
- Fig. 5b shows a detail, magnification 66000X, of the TiO₂ nanoparticles (dispersion) within in the B₂O₃ agglomerate in Fig. 5a.

The first step of the method according to the invention is the solubilisation of a boron precursor, in an (own) oxidized state, in a solvent suitable for its solubilisation. Typically boric acid or boron oxide is used as oxidised precursor, but the method is not to be understood limited to these compounds. For instance the B₂S₃ in water could be converted into boron oxide eliminating the hydrogen sulphide, as well as salts more or less complex than boric acid.

The simplest solvent to be used is water, particularly the demineralised or deionised water, such as the Millipore® water. The boron oxide, hydrating after being dissolved in water, forms boric acid and for solvation action, the molecules will be homogeneously dispersed within the solution.

In order to minimize the volume of solvent (to be used), which in the latter steps of the method should be removed, the dissolution operation can be advantageously carried out at a temperature close to the boiling point of the solvent. Furthermore, it is preferable that the amount of precursor used is below the solubility limit, to avoid crystallization phenomena, especially during the transferring step/process of the solution into the cryogenic liquid, described below.

Once the complete solubilisation is obtained, the solution will be cryogenically frozen, for obtaining very fine particles. This operation is implemented by inserting the solution into a cryogenic liquid, to obtain a dispersion of the solution in the cryogenic liquid.

Preferably, said operation is carried out by vaporization within the cryogenic liquid, using for instance a spray gun, which picks up the solution from the (dissolution) beaker - that keeps the boiling temperature - and transfers it rapidly into the vessel containing the cryogenic liquid; the direct contact between the vaporized solution and the (cryogen) liquid forms a freeze of very fine particles that reflect the (homogeneous) composition of the liquid solution and do not allow the phenomena of grain growth and/or segregation in the solid phase.

For an inexpensiveness reason, the liquid nitrogen is an excellent candidate for the cryogenic freezing function, but it is understood that other cryogenic liquids may be used. The amount of cryogenic liquid should not run out/be depleted until the whole solution, kept at boiling point, has not been completely transferred; very good results are obtained keeping the cryogenic liquid under agitation; both precautions are aimed to prevent the formation of agglomeration (phenomena).

The freezing step is aimed to create a very fine particles of the homogeneous solid phase, in order to maximize the surface area of the particles and to facilitate the sublimation of the solvent. Also, if the particles of the frozen phase under lyophilisation have fine size, the nanoparticles at the end of the lyophilisation will be fine and porous.

After the freezing, the cryogenic liquid should be left to evaporate; hence it will be possible the transferring of the solid mass from the container inside the lyophilisation chamber and proceed with the lyophilisation step. Typically such method is done at a temperature of -50 °C or below, using a cooling chamber able to condense the vapour of the solubilisation solvent, sublimed by the solid solution. The solid phase is placed in a suitable container in communication with the cooling/condensation chamber and both volumes are under a dynamic vacuum, preferably equal to 10⁻³ mbar, for instance by means of a rotary pump.

The lyophilisation operation can be supported by a suitable heating source, as usually occurs in the common industrial lyophilisation. The lyophilisation step is known per se and does not require any further explanations. For this purpose can be employed the standard industrial equipment commercially available; the lyophilisation (technique) is based on the sublimation principle, i.e. the direct transfer of the solid state into a vapour state. Where the solvent is water, the lyophilisation is carried out keeping the pressure under 4.58 Torr (mmHg) (pressure of the triple point of water), heating to accelerate the process.

The direct transfer solid-vapour state guarantees the maintenance of the chemical homogeneity created in the liquid solution, excluding the possibility of the boron oxide crystallization with subsequent uncontrolled growing of its grains and eventually causing the segregation of the doping substances eventually inserted in the starting solution.

In the embodiment of the method according to the invention that leads to the production of doped boron, the dopant element or compound is added in the solvent used (for this purpose) during the solubilisation step of the oxided precursor of boron. Dopants soluble in such solvent can be used, or insoluble dopants or also a combination of soluble dopants and insoluble dopants.

The term of soluble dopant will include all the compounds soluble in the employed solvent which, after the reduction state/reaction, produce/yield boron doped with one or more of the elements forming the (same) compound. For instance, to produce the carbon-doped boron carbohydrates, such as starch, sugar and the like, are advantageously used as soluble dopants. Other soluble dopants include, in general, all the soluble organic and inorganic molecules containing the soluble elements able to dope the boron. An example is carbon.

As insoluble dopants, may be reported/cited by way of an example the titanium dioxide (TiO₂), the silicon carbide (SiC), the polymethyl silanes, and/or more generally the use of any water (H₂O) insoluble, inorganic molecule, which may represent a particle inclusion with a defined size, concentration and order within the boron oxide. In case of insoluble dopant, in order to produce a dispersion of particles inside the boron, a colloidal dispersion of the selected doping element or compound in the solution of the boron precursor (B₂O₃ or H₃BO₃) is produced.

The concentration of the dopant is not critical and can be appropriately chosen according to the needs. Typically, concentrations of the doping compound or element in solution which yield a doped boron having, reported to boron, a molar or atomic percentage of 0.1% - 10% of the doping compound or element are used.

In case of doped boron used for the production of magnesium diboride, it is particularly advantageous for the previously highlighted/mentioned purposes to insert in the boron matrix dopants, such as carbon, SiC, B₄C, TiB₂, TiO₂, polymethyl silanes.

The insertion of a dopant does not change the following steps of cryogenic freezing and lyophilisation.

After the lyophilization step, the obtained product is chemically reduced for forming elementary boron, optionally doped. The reduction is preferably carried out at temperatures sufficiently low, under inert atmosphere or reducing flow, using magnesium as reducing agent. The magnesium oxide, formed as consequence of the B₂O₃ reduction, should be eliminated and for this purpose a series of washes in acid environment, as describe in literature, followed by thermal treatment can be performed.

However, it is understood that the reduction phase can be implemented with any reducing agent, known for this purpose.

Therefore, the method according to the invention can form four possible products:
1) when a solution containing only the soluble boron precursor has been used, after the lyophilisation step is obtained as final product B₂O₃, highly fine and porous from which, after the chemical reduction stage, is obtained a nanostructured and amorphous boron, typically with a purity between 95% and 98%; the amorphous nature and the nanometric size of boron particles thus obtained is advantageous, since it allows to minimize time and temperature of the reaction which involves the same boron;
2) if a solution including a soluble element or compound as dopant, such as a soluble carbon compound, has been used, a nanostructured boron with some of its reticular sites occupied by the doping element, is obtained in consequence of the reduction; the substitution degree will depend on the concentration of the inserted dopant; such obtained doped and nanostructured boron is particularly useful for improving the upper critical field (H_{c2}) in the MgB₂ production;
3) if the doping element or compound used is insoluble, the matrix of nanostructured boron that obtained after the reduction step will contain the doping element or its compounds dispersed in form of nanoagglomerate; the product thus obtained is, for instance, particularly advantageous for varying the mechanical properties of boron fibres in composite materials;
4) lastly, if dopants, soluble and insoluble in the dissolution solvent of the boron precursor, have been simultaneously used, the obtained product is a nanostructured boron showing the simultaneous presence of doping elements on some substituted reticular sites and a nanoagglomerates dispersed within the boron matrix; the product thus obtained is, for instance, particularly useful in the production of magnesium diboride, for improving its transport properties, enhancing at the same time the H_{c2} value and the pinning force.

With term of nanostructured boron, as employed in this description, is intended in general a boron having a particle size below 1 µm; however, said definition does not exclude the presence of a small amount of particles larger than 1 µm, i.e. less than 5% in mass. Typically, the obtained powders show a particle size distribution with section less than 200 nm, preferably less than 150 nm.

The nanostructured boron, doped and undoped, such as the precursor (B₂O₃), obtained by the method according to the invention, can be used as such, e.g. for boron fibres mechanically enhanced and airbag (technology) or for producing boron compounds, such as the magnesium diboride superconductor, but also for the direct production of precursors of many other products, including particularly:
- Boron nitride (BN) in hexagonal form (h-BN, α-BN, g-BN), which is obtained by ammonolysis or nitridization of the boron trioxide, hence polymorphic forms arising from: cubic boron nitride (c-BN, β-BN, z-BN), polycrystalline boron nitride (Pc-BN), amorphous (a-BN), the white carbon fibre structure similar to carbon nanotubes; these compounds are used for various applications, including lubricants, electrical insulators, catalysts for fuel cells (h-BN), abrasives, heat sinks (c-BN), thin films, surface hardening agent for alloys (Pc-BN), composite materials (white carbon fiber), semiconductor devices (a-BN);
- Boron phosphate (BPO₄); it has an enormous industrial value both as catalyst in organic synthesis and in the glass industry for giving special features. It is synthesized starting from solutions of phosphoric acid and boric acid dehydrated at low temperatures (lyophilisation), which is then crystallized by thermal treatment at 1000 °C;
- Boron carbide (B₄C); it is used for the production of cutting tools, of thin films coatings for improving the resistance to wear and tear and to scratch, in greater thicknesses is employed for ballistic plates, protective barriers for vehicles, bullet-proof vest, abrasives, neutron absorbers for nuclear reactors.

All these mentioned compounds have a key role in chemical reactions and are interesting materials for industry; for all these (synthesis) reactions are thus important having boron precursors nanostruttured and possibly doped. Since these compounds are often used as catalysts, they must be as fine as possible for showing a high (reactive) surface area, similarly if used in form of precursor compounds for the production of thin films by plasma spray deposition (PSD) and chemical vapour deposition (CVD) techniques.

In the synthesis of MgB₂, using the doped or undoped boron, obtained according to the invention, the reaction of a stoichiometric ratio between Mg and B is preferred. Preferably, the reaction is carried out at the temperature of 760 °C (ramp rate = 7°C/min) for one hour under controlled atmosphere, to prevent the oxidation of the product. Such conditions are optimal, for instance, for the production of 10 g of powder, employing a Lindberg furnace model 51442-R (4880 Watt), driven by a Lindberg electronic unit model 58114-PB.

### Example

### Preparation of 10 g of carbon-doped and nanostructured boron at 0.5 atomic %

138 g of boron oxide (B₂O₃) are dissolved in 1.2 litres of distilled water, heated till the boiling point, (then) 0.1458 g of soluble starch are added, this produces, when the reduction process is over, a nominally doped boron at 0.5 atomic %. Then, maintaining the boiling temperature, the solution is sprayed in about 5 litres of liquid nitrogen (N₂L). The necessary amount of nitrogen depends on the time required for transferring the solution, therefore it is convenient to use a (nitrogen) surplus and then waiting the (complete) nitrogen evaporation.

The cryogenically frozen mass, in the form of fine powder, is introduced in suitable containers for executing the lyophilisation.

In this case, the carbon solubilisation under starch form is used to obtain at atomic level a dispersion of the same element in the final boron; alternatively, using insoluble micro- or nanoparticles, a colloidal dispersion (of such particles) is formed, which, at the end of the process/reaction, lead to a dispersion of micro- or nanoparticles within the boron matrix. Otherwise, if the production of pure boron oxide is desirable the addition of (any) dopant must be avoided.

Then, the B₂O₃ nanopowders can be mixed with magnesium for reducing the boron oxide, obtaining the elementary boron, amorphous and doped, and performing the procedures/operations described in literature to develop the metall-thermic reaction. Should be noted that an inappropriate thermal treatment, such as high temperature and/or prolonged reaction time, oxidising atmospheres, can degrade the product of the cryogenic freezing and lyophilisation steps.

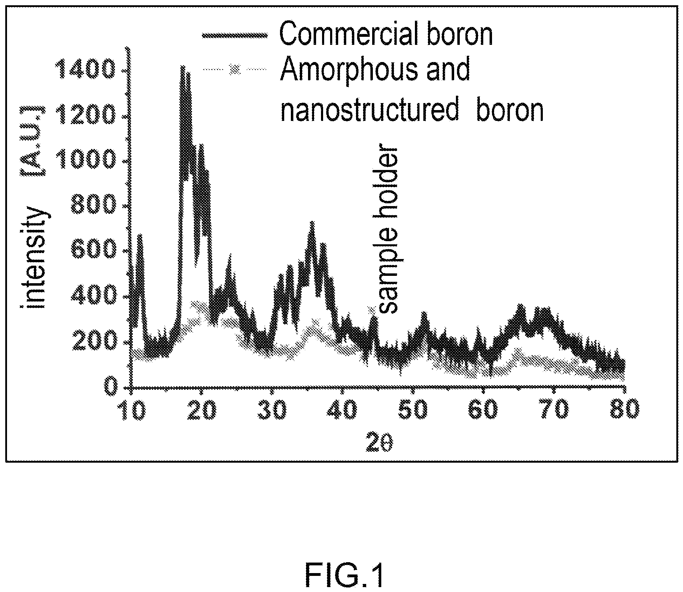

The characterization of the product obtained by the method according to the invention has been made through X-ray diffractometry. Fig. 1 the pattern of the boron obtained by the method according to the invention is shown and compared with amorphous boron available from one of the largest European boron producers. As can be seen, the intensity of the commercial boron is higher compared to an equal mass, (and) considering also the presence of less defined peaks of the boron according to the invention, the conclusion is that the latter shows an higher amorphous degree than the commercial one, as verified by the HRTEM analysis. The absence of extraneous peaks points out a good purity degree of the product, at least comparable to that of commercial product.

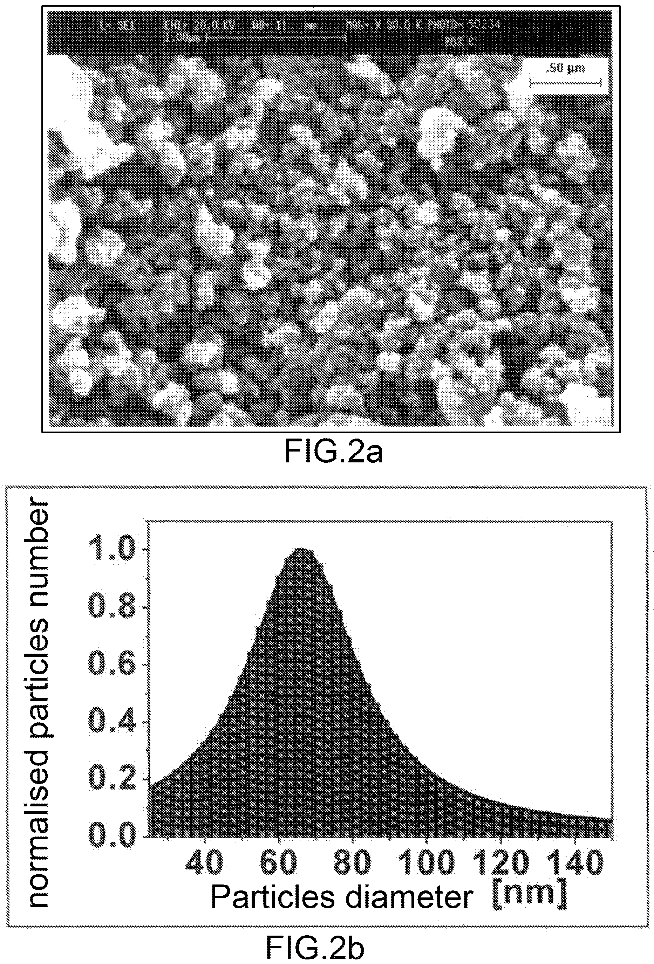

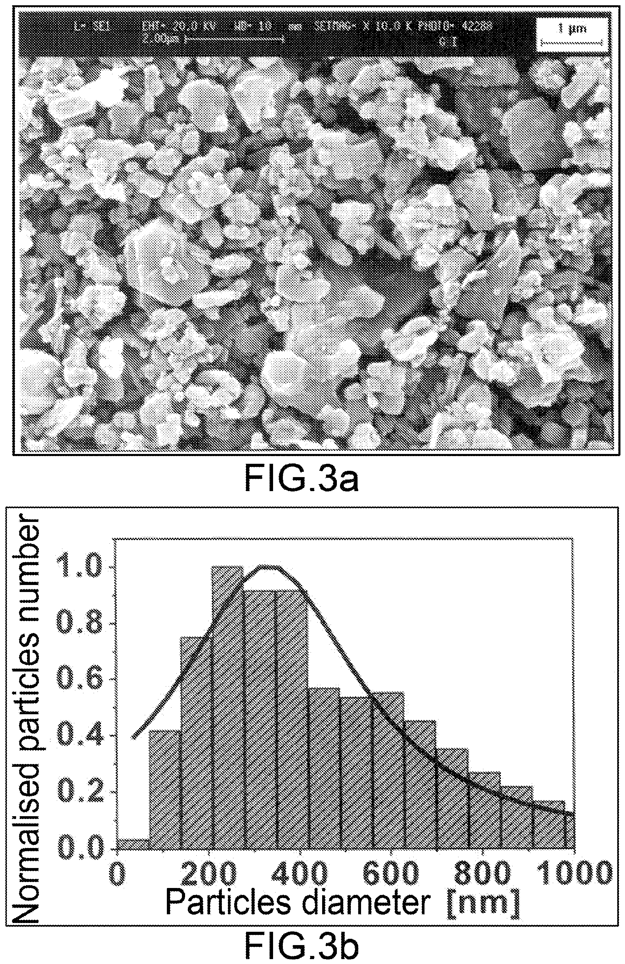

The morphological characterization through the electron microscopy SEM (Fig. 2a) and the determination of particle size distribution by electron microscopy investigation have confirmed the nanometric structure and specifically a grain size section generally less than 200 nm. The comparison of morphology and particle size distribution of a commercial boron (figs. 3a and 3b) clear up the uniformity and the fineness of the powders obtained by the conceived method.

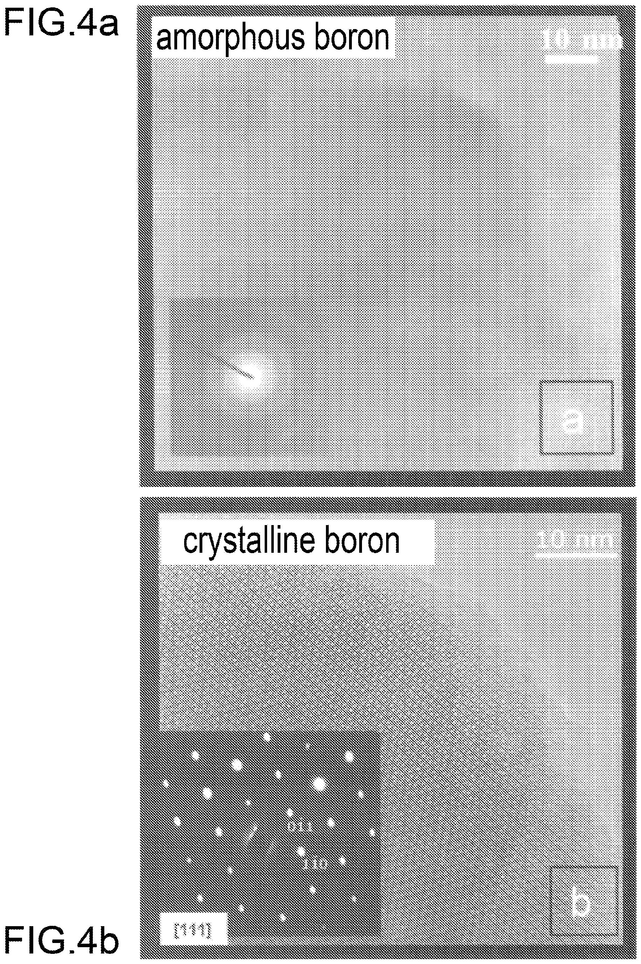

For the characterization purposes, a sample of the same boron has been observed by a high resolution-transmission electron microscope (HRTEM) and compared with the commercial boron; thus has been highlighted its real amorphous nature, while the commercial boron, used by way of comparison, shows a polycrystalline nature; that can be observed through the lattice fringes of the diffraction figure in the inset of figs. 4a and 4b.

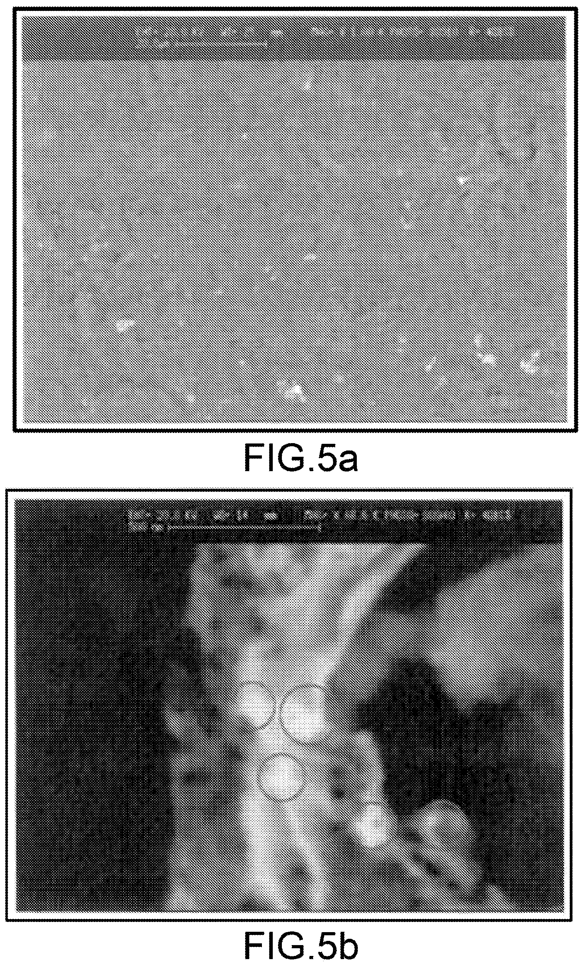

The SEM images of figs. 5a and 5b relate to boron according to the invention, obtained by the insertion of titanium dioxide particles in the dissolution step. A homogeneous dispersion of titanium dioxide and the nanometric nature of TiO₂ are shown.

## Claims

1. Method for the production of elementary boron, optionally doped, **characterised in that** it includes the steps of:
a) dissolving an oxidised boron precursor compound selected from boric acid and its salts, boron oxide and boron sulphide in a solvent able to dissolve it;
b) introducing the solution from step a) into a cryogenic liquid to obtain a freezed dispersion of said solution and evaporating the cryogenic liquid to transform said solution in a finely divided particulate form, avoiding the solute precipitation;
c) sublimation of the dissolving solvent by lyophilisation to limit the solute aggregation;
d) reduction with a reducing agent, to obtain elementary amorphous boron in particle form.

2. Method according to claim 1, for the production of elementary doped boron comprising the operation of adding one or more elements or doping compounds in the step a) wherein said boron precursor is solubilised.

3. Method according to claim 2, in which the doping agent is soluble in the dissolving solvent of said precursor.

4. Method according to claim 3, in which said soluble doping agent is selected from the group consisting of organic molecules, soluble in the dissolving solvent, able to furnish doping atoms on boron sites, such as carbohydrates.

5. Method according to claim 3, in which said doping agent is a compound soluble in the dissolving solvent of said precursor that, owing to the reduction step d) and/or owing to thermal treatments subsequent to said reduction step, is able to generate the replacement, in some boron reticular sites, of an element forming said compound.

6. Method according to claim 2, in which said doping agent is insoluble in the dissolving solvent of said boron precursor.

7. Method according to claim 6, in which said doping agent is selected from the group consisting of metal oxides, such as TiO₂, metal diboride, such as TiB₂ type, metalloid or non-metals carbides such as SiC, B₄C and polymethyl silanes.

8. Method according to claim 6, wherein said insoluble doping agent is introduced in the solution of the boron precursor as a colloidal dispersion.

9. Method according to any of the previous claims, **characterised in that** said step b) is performed by nebulisation or atomisation of said solution into the cryogenic liquid.

10. Method according to any of previous claims, **characterised in that** said reduction step d) is performed using magnesium as a reducing agent.

11. A process for the production of magnesium diboride comprising the steps of preparing elementary boron according to the method of any of claims 1 to 10 and using the thus prepared elementary boron for producing magnesium diboride.

## Patentansprüche

1. Verfahren zur Herstellung von elementarem Bor, wahlweise dotiert, **dadurch gekennzeichnet, dass** es die folgenden Schritte umfasst:
a) Auflösen einer oxidierten Bor-Precursor-Verbindung, ausgewählt aus Borsäure und ihren Salzen, Boroxid und Borsulfid in einem Lösungsmittel, das sie auflösen kann;
b) Zuführen der Lösung aus Schritt a) in eine kryogene Flüssigkeit, um eine gefrorene Dispersion der Lösung zu erhalten und Verdampfen der kryogenen Flüssigkeit, um die Lösung in eine feinteilige partikuläre Form umzuwandeln, wobei das Ausscheiden des gelösten Stoffes verhindert wird;
c) Sublimieren des auflösenden Lösungsmittels durch Gefriertrocknen, um die Aggregation des gelösten Stoffes zu begrenzen;
d) Reduzieren mit einem Reduktionsmittel, um elementares amorphes Bor in Teilchenform zu erhalten.

2. Verfahren nach Anspruch 1 zur Herstellung von elementarem dotierten Bor, aufweisend den Arbeitsvorgang des Hinzufügens von einem oder mehreren Elementen oder Dotierungsverbindungen im Schritt a), in dem der Bor-Precursor aufgelöst wird.

3. Verfahren nach Anspruch 2, wobei das Dotiermittel in dem auflösenden Lösungsmittel des Precursors lösbar ist.

4. Verfahren nach Anspruch 3, bei dem das lösbare Dotiermittel aus der Gruppe bestehend aus organischen Molekülen, die in dem auflösenden Lösungsmittel lösbar sind und Dotierungsatome an Borplätzen liefern können, wie beispielsweise Kohlenhydrate, ausgewählt ist.

5. Verfahren nach Anspruch 3, bei dem das Dotiermittel eine in dem auflösenden Lösungsmittel des Precursors lösbare Verbindung ist, die in Folge des Reduktionsschritts d) und/oder in Folge von Wärmebehandlungen anschließend an den Reduktionsschritt in einigen Bor-Gitterplätzen den Austausch eines die Verbindung bildenden Elements erzeugen kann.

6. Verfahren nach Anspruch 2, bei dem das Dotiermittel in dem auflösenden Lösungsmittel des Bor-Precursors unlöslich ist.

7. Verfahren nach Anspruch 6, bei dem das Dotiermittel aus der Gruppe bestehend aus Metalloxiden, wie TiO₂, Metalldiborid, beispielsweise vom TiB₂-Typ, metalloiden oder nichtmetallischen Carbiden, wie beispielsweise SiC, B₄C und Polymethylsilanen ausgewählt ist.

8. Verfahren nach Anspruch 6, wobei das unlösliche Dotiermittel als kolloidale Dispersion in die Lösung des Bor-Precursors eingeleitet wird.

9. Verfahren nach einem der vorangehenden Ansprüche, **dadurch gekennzeichnet, dass** der Schritt b) durch Zerstäuben oder Atomisieren der Lösung in die kryogene Flüssigkeit durchgeführt wird.

10. Verfahren nach einem der vorangehenden Ansprüche, **dadurch gekennzeichnet, dass** der Reduktionsschritt d) unter Verwendung von Magnesium als Reduktionsmittel durchgeführt wird.

11. Herstellungsprozess für Magnesiumdiborid, der die Schritte zur Zubereitung von elementarem Bor gemäß dem Verfahren nach einem der Ansprüche 1 bis 10 und die Verwendung des somit zubereiteten elementaren Bors zur Herstellung von Magnesiumdiborid umfasst.

## Revendications

1. Procédé de production de bore élémentaire, éventuellement dopé, **caractérisé en ce qu'**il comporte les étapes :
a) de dissolution d'un composé précurseur de bore oxydé choisi parmi l'acide borique et ses sels, l'oxyde de bore et le sulfure de bore dans un solvant à même de le dissoudre ;
b) d'introduction de la solution obtenu à l'étape a) dans un liquide cryogénique pour obtenir une dispersion congelée de ladite solution et d'évaporation du liquide cryogénique pour transformer ladite solution en une forme particulaire finement divisée en évitant la précipitation du soluté ;
c) de sublimation du solvant de dissolution par lyophilisation pour limiter l'agrégation du soluté ;
d) de réduction avec un agent réducteur pour obtenir du bore amorphe élémentaire sous une forme particulaire.

2. Procédé selon la revendication 1 pour la production de bore dopé élémentaire comprenant l'opération d'addition d'un ou de plusieurs éléments ou de composés dopants à l'étape a), dans lequel le précurseur de bore est solubilisé.

3. Procédé selon la revendication 2, dans lequel l'agent dopant est soluble dans le solvant de dissolution dudit précurseur.

4. Procédé selon la revendication 3, dans lequel ledit agent de dopage soluble est choisi parmi le groupe comprenant des molécules organiques solubles dans le solvant de dissolution, à même de fournir des atomes dopants sur des sites de bore, tels que des hydrates de carbone.

5. Procédé selon la revendication 3, dans lequel ledit agent dopant est un composé soluble dans le solvant de dissolution dudit précurseur qui, du fait de la réduction de l'étape d) et/ou du fait des traitements thermiques subséquents à ladite étape de réduction, est à même de générer le remplacement, dans certains sites réticulaires de bore, d'un élément formant ledit composé.

6. Procédé selon la revendication 2, dans lequel ledit agent dopant est insoluble dans le solvant de dissolution dudit précurseur de bore.

7. Procédé selon la revendication 6, dans lequel ledit agent dopant est choisi parmi le groupe comprenant des oxydes de métaux tels que TiO₂, du diborure métallique par exemple du type TiB₂, un métalloïde ou des carbures non métalliques tels que SiC, B₄C et des silanes de polyméthyle.

8. Procédé selon la revendication 6, dans lequel ledit agent dopant insoluble est introduit dans la solution du précurseur de bore en tant qu'une dispersion colloïdale.

9. Procédé selon l'une quelconque des revendications précédentes, **caractérisé en ce que** ladite étape b) est effectuée par nébulisation ou atomisation de ladite solution dans le liquide cryogénique.

10. Procédé selon l'une quelconque des revendications précédentes, **caractérisé en ce que** ladite étape de réduction d) est effectuée en utilisant du magnésium en tant qu'agent de réduction.

11. Processus de production de diborure de magnésium comprenant les étapes de préparation de bore élémentaire selon le procédé selon l'une quelconque des revendications 1 à 10 et utilisant le bore élémentaire ainsi préparé pour la production de diborure de magnésium.
